# EUROPEAN PATENT APPLICATION

(11) **EP 1 219 482 A1**
(43) Date of publication of application: **03.07.2002**
(21) Application number: 00830859.5
(22) Date of filing: 28.12.2000
(51) Int. Cl.: B60J 5/04, B60R 13/02

(54) **Trim panel for vehicle doors**

(71) Applicant: Carbone, Marco, 10094 Giaveno (IT)
(72) Inventor: Carbone, Marco, 10094 Giaveno (IT)
(74) Representative: Marchitelli, Mauro

(57) **Abstract**

An inner door panel for the door of a motor vehicle comprises a panel body (16) equipped with a layer of trim (20) applied on at least one part of one of its internal faces (18). The panel (16) constitutes a support for a window-regulator device (32).

## Description

The present invention relates to an inner door panel for motor vehicles, in particular for cars.

The side door of a car traditionally comprises a door structure, generally consisting of pressed sheet metal, on which, after painting, a plurality of components are applied, such as the lock, the side window, the rubber weather stripping, the window-cleaning strip, the linkage rods for operating the lock, the manual or electric window-regulator, possible guides on which the window slides, possible loudspeakers, and possible electronic components, etc.

On certain models of motor vehicle, the door structure is made in such a way as to create a compartment in which a sheet-metal and/or plastic support (usually referred to as "carrier") is mounted, on which the electrically or manually operated window-regulator assembly is installed, and, in certain cases, there are mounted the side window, the lock, the linkage rods, the window-regulator guides, and the electric power system for supplying the electrical functions.

On the part of the door facing towards the inside of the vehicle, an inner door panel is applied which has aesthetic functions. The said panel generally consists of a plate made of thermoplastic material obtained by thermoforming and provided with an aesthetic trim or upholstery, for example consisting of fabric, leather, artificial leather, etc. Mounted on the inner door panel are components, such as the handle for operating the lock, a possible window winder, in the case of a manually operated window-regulator, or else the push-buttons for operating the power window, the armrest, the door pocket, etc.

Equipping a door assembly complete with all the components and accessories referred to above entails considerable expenditure in terms of both staff and equipment. The purpose of the present invention is to simplify the operations of installation of the door assembly by providing a pre-assembled unit or pre-assembly carrying the majority of the components of the door assembly.

According to the present invention, the above purpose is achieved thanks to the fact that the inner door panel constitutes a supporting member which carries the components of the window-regulator system for the door

Further characteristics and advantages of the present invention will emerge clearly from the ensuing detailed description, given purely by way of a nonlimiting example, with reference to the attached drawings, in which:

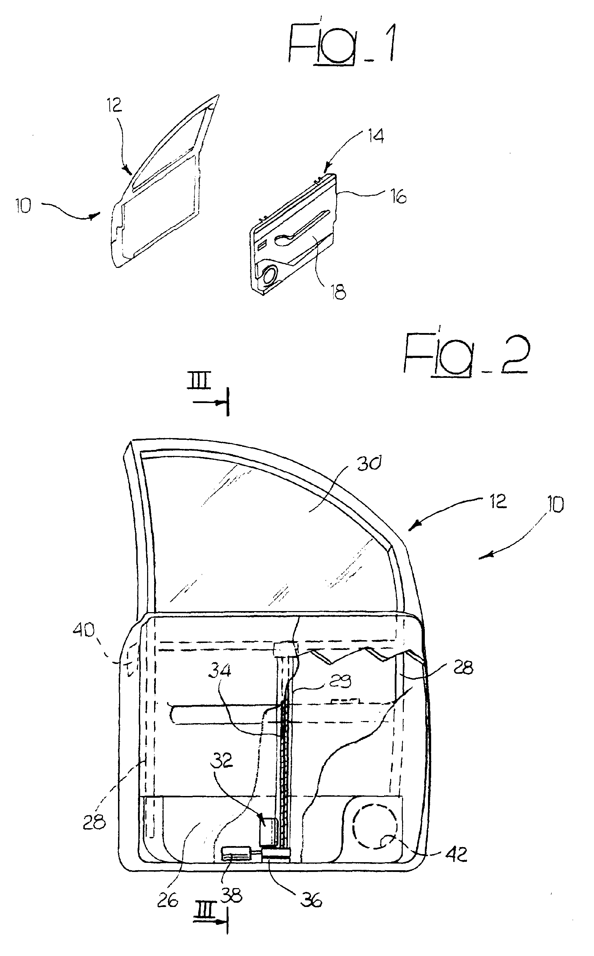

Figure 1 is a schematic perspective view illustrating a door assembly equipped with an inner door panel according to the present invention;
Figure 2 is a schematic front view of the door assembly of Figure 1; and
Figure 3 is a schematic cross-sectional view taken along the line III-III of Figure 2.

With reference to the drawings, the number 10 designates a door assembly for a motor vehicle made in accordance with the present invention. The door assembly 10 comprises a door structure 12 made in a way of itself known, starting from a pressed metal sheet. According to the present invention, the complete door assembly is made up of just two units, the first of which consists of the door structure 12, and the second of which is a pre-assembled unit 14 which uses an inner door panel 16 as a supporting element for the various devices and components of the door assembly. In particular, the inner door panel 16 is used as a support for the window-regulator device of the door.

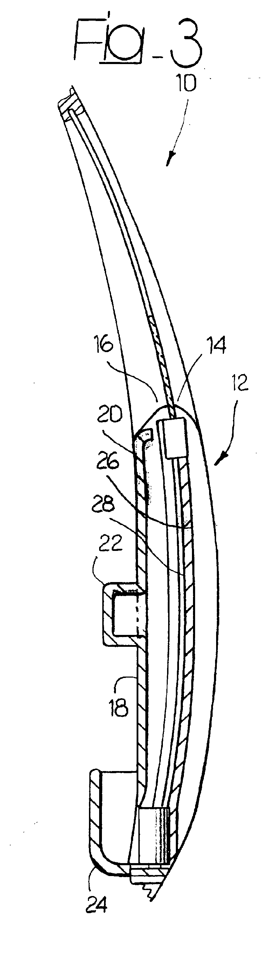

With reference to Figures 2 and 3, the inner door panel 16 comprises a plate of thermoplastic material moulded by thermoforming. The inner door panel 16 has an internal face 18 on which is applied, in a known way, a trim or upholstery layer 20 which covers at least one part of the face 18. Fixed on the panel 16 are various components, such as an internal door handle with armrest 22, a door pocket 24, etc.

According to the invention, on the external face 26 of the panel 16 are provided seats for mounting the window-regulator device and possibly other components of the door assembly. These seats may preferably be obtained in such a way that they form an integral part of the panel during thermoforming of the panel 16.

The seats that enable installation of the window-regulator device on- the inner door panel 16 preferably comprise a pair of guides 28 designed to guide the vertical sliding movement of the window 30, as well as seats for positioning and fixing the window-regulating assembly, designated as a whole by 32. In addition, further guides 29 that are integral with the panel may be provided as guides for the cables controlling the window-regulator or any other component integrated in the window-regulator device. A control assembly for a window-regulating device that is particularly suited for use in an integrated supporting panel or carrier according to the present invention is described in detail in the Italian patent application No. TO 2000A000786. The control assembly 32 comprises a spiral flexible cable 34 one end of which is anchored to the window 30. The flexible cable 34 is moved by a gear set 36 driven by an electric motor 38. The inner door panel 16 is preferably provided with seats set integral with the panel for fixing the gear assembly 16 and the electric motor 38. Also arranged on the panel 16 are electrical conductors (not illustrated) for supply and control of the electric motor 38. Mounted on the external face 18 of the inner door panel 16 are the push-buttons for controlling the power-window device, and the said buttons are connected to the electrical circuit controlling the motor 38. The fact that the control push-buttons, the electric motor, and the electrical conductors are arranged on a single component (the carrier panel 16) considerably simplifies assembly operations.

In addition to the function of supporting the window-regulator device, the panel 16 may also be used as a support for other components of the door assembly. In particular, the panel 16 may be provided with a seat 40 for the door lock, a seat 42 for installing loudspeakers, as well as possible seats (not illustrated) for supporting the rods that connect the door lock to the door handle installed on the internal face 18 of the panel 16.

The integrated inner door panel 16 thus constitutes a thorough-going pre-assembled unit which is installed directly on the door structure 12 to make up, together with the latter, the complete door.

## Claims

1. An inner door panel for the door of a motor vehicle, comprising a panel body (16) equipped with a layer of trim (20) applied on at least one part of one of its internal faces (18), **characterized in that** said panel (16) constitutes a support for a window-regulator device (32).

2. An inner door panel according to Claim 1, **characterized in that** it comprises seats for positioning and fixing an actuator assembly (32) for actuating the window-regulator device, said seats being made in an integral way on an external face (26) of the panel (16).

3. An inner door panel according to Claim 1, **characterized in that** it comprises guide means (28) for guiding a sliding window (30), said guide means being made in an integral way on an external face (26) of the panel (16)

4. An inner door panel according to Claim 1, **characterized in that** it comprises a seat (40) for installing a lock for the door.

5. An inner door panel according to Claim 1, **characterized in that** it comprises a seat (42) for a loudspeaker.
